# EUROPÄISCHE PATENTSCHRIFT

(11) **EP 2 799 267 B1**
(45) Veröffentlichungstag und Bekanntmachung des Hinweises auf die Patenterteilung: **27.04.2016**
(21) Anmeldenummer: 14164614.1
(22) Anmeldetag: 14.04.2014
(51) Int. Cl.: B60J 7/06

(54) **Blachenheizung**
Tarpaulin heating
Chauffage de bâche

(30) Priorität: 30.04.2013 CH 8902013
(43) Veröffentlichungstag der Anmeldung: 05.11.2014
(73) Patentinhaber: PartGyx Beteiligungen AG, 4665 Oftringen (CH)
(72) Erfinder: Killer, Thomas, 6300 Zug (CH); Heimann, Robert, 4663 Aarburg (CH); Wicki, Roland, 8957 Spreitenbach (CH)
(74) Vertreter: Frommhold, Joachim

(56) Entgegenhaltungen:
- US-A- 2 201 984
- US-A- 6 056 347
- US-A1- 2004 178 657

## Beschreibung

Die Erfindung betrifft eine Blachenheizung bzw. eine beheizbare Plane für LKW, Anhänger, Auflieger, Festaufbauten oder auch Zeltdächer und dergleichen umfassend eine formstabil angeordnete Blache oder Plane.

Eine beheizbare Plane für LKW ist zum Beispiel aus der DE-U-202011003084 bekannt. Hierbei ist die Plane mit Heizdrähten durchzogen um die Plane zu erwärmen. Vorteilhaft soll der Heizdraht in der Mitte des Planenmaterials eingeschweisst sein, insbesondere bei Materialstärken von ca. 2-3mm. Bei dünnerem Material soll der Heizdraht zwischen zwei Schichten angeordnet sein, die nachfolgend miteinander verschweisst werden. Die Herstellung derartiger Planen ist entsprechend aufwändig und der Heizdraht muss möglichst engmaschig über die gesamte Dachfläche der Plane angeordnet sein. Dies erhöht einerseits den Material- und Arbeitsaufwand und andererseits besteht ein hohes Risiko von Drahtbruch infolge der Planenbewegungen und der unterschiedlichen Ausdehnungskoeffizienten.

Bei einer Vorrichtung zur Entfernung von Schnee von Dächern wird gemäss gemäss DE-A-102006006828 vorgeschlagen, eine glattflächige Plane auf der Dachfläche anzubringen resp. unter den Schnee zu ziehen und den auf der Plane befindlichen Schnee durch Abrutschen von der Dachfläche zu entfernen. Dabei soll die Plane an einem beheizten Rohr befestigt sein um das Ziehen der Plane zu erleichtern. Dieser Vorschlag ist vorrangig für Schräg- resp. Steildächer geeignet.

Aus dem Baugewerbe ist es bekannt, Warmluft mittels eines Gebläses in Bauhüllen einzubringen, siehe zum Beispiel DE-A-102007019112. Diese wirkt diffus auf die gesamte Bauhülle.

Die US 6056347 A offenbart eine Schutzhülle für einen, nicht im Fahrtbetrieb befindlichen PKW, die zwei Lagen umfasst, wobei zwischen den Lagen ein Heizschlauch angeordnet ist.
Dieser wird von einem externen Gebläse, das am vorderen Ende des Schlauchs anschliessbar ist mit Warmluft versorgt. Die Luft tritt durch eine Austrittsöffnung des Schlauchs am anderen Ende der Schutzhülle wieder aus.
Vor Inbetriebnahme des PKW muss die Schutzhülle vom Gebläse getrennt und vom Fahrzeug entfernt werden.
Eine vergleichbare Schutzhülle ist in der US 2201984 gezeigt.
Diese weist jedoch anstelle eines Heizschlauchs Abstandhalter zwischen den Lagen auf, um einen Strömungsraum für die Luft zu ermöglichen. Die Luft kann durch Löcher in der inneren Lage austreten.

Der Erfindung liegt die Aufgabe zugrunde, eine Blachenheizung bzw. eine beheizbare Plane für LKW, Anhänger, Auflieger, Festaufbauten oder auch Zeltdächer und dergleichen zu schaffen, die eine gezielte Beheizung des Dachbereichs der Blache und damit eine effektive Freihaltung von Eis und Schnee ermöglicht.

Die Aufgabe ist mit den Merkmalen des Patentanspruch 1 gelöst. Erfindungsgemäss ist eine temporäre Heizschlauchanordnung mit mindestens einem Heizschlauch innen im Dachbereich einer formstabil auf der Ladefläche angeordneten Blache vorgesehen, unterhalb einer Decke resp. Deckenfläche der Blache.

Die Heizschlauchanordnung wird von einem üblichen Heiz- oder Heissluftgebläse mit Warmluft versorgt.

Bevorzugte Ausführungsformen sind in den abhängigen Ansprüchen offenbart. Insbesondere ist die Heizschlauchanordnung mittels eines, vorzugsweise verschieblichen Zwischendachs temporär vom Laderaum trennbar. Die Blachenheizung soll vorrangig im Stand, insbesondere über Nacht angewendet werden, so dass auch ein Zugriff auf eine externe Energieversorgung möglich ist. Ein Betrieb während der Fahrt ist möglich.

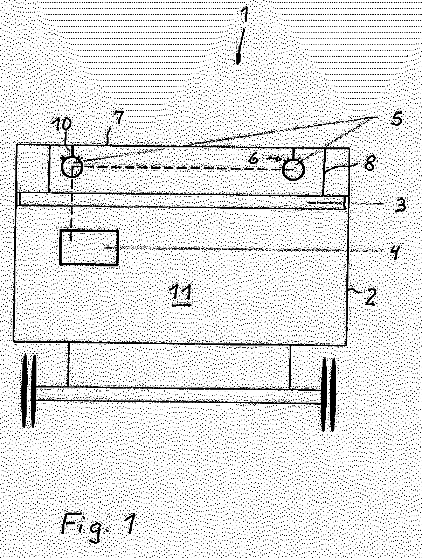

Die Erfindung wird nachfolgend in einem Ausführungsbeispiel anhand einer Zeichnung näher beschrieben. In der Zeichnung zeigen die
- Fig. 1:: ein LKW mit einer erfindungsgemässen Blachenheizung,

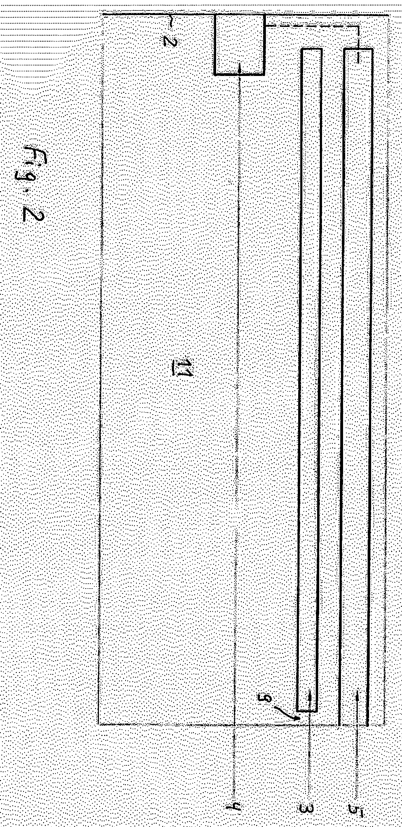

- Fig. 2:: die Blachenheizung nach Fig. 1 in Seitenansicht.

Die Ladefläche eines Sattelaufliegers oder LKW 1 ist mit einer Blache 2, die in einem nicht dargestellten Rahmen formstabil geführt ist, vollständig eingehaust. Die Blache 2 kann in bekannter Weise harmonikaförmig wie eine Faltjalousie verschoben werden.

Unterhalb der Decke resp. Deckenfläche 7 der Blache 2 ist im Innern parallel zur Deckenfläche 7 ein Zwischendach 3 oder Zwischenboden bevorzugt aus Blachenmaterial eingezogen. Dieses Zwischendach 3 ist über flexible Halteelemente 8, ggf. lösbar mit der Deckenfläche 7 verbunden, nicht jedoch mit den Seitenflächen der Blache 2. Zu dieser besteht ein schmaler Spalt 9. Das Zwischendach 3 weist einen Abstand von ca. 50 cm zur Deckenfläche 7 auf und trennt den Laderaum 11 von zwei oder ggf. mehreren, in Längsrichtung des LKW 1 angeordnete, bevorzugt flexible Heizschläuche 5 aus bevorzugt Blachenmaterial ab. Diese Heizschläuche 5 sind über flexible Halteelemente 10, ggf. lösbar an der Deckenfläche 7 angehangen und können somit, wie auch das Zwischendach 3, mit der Blache verschoben werden.

Die Heizschläuche 5 sind weiterhin mit einem Heizgebläse 4 verbunden und werden von diesem mit Warmluft gespeist. Die Heizschläuche 5 weisen über ihre Länge eine Vielzahl von Öffnungen 6 zum Durchtritt der Warmluft gegen die Deckenfläche 7 auf und sind so angeordnet, dass die Deckenfläche 7 möglichst gleichmässig mit der Warmluft beaufschlagbar ist. Der Betrieb des Heizgebläses 4 und die Warmluftzufuhr erfolgen bevorzugt im Stand resp. über Nacht, besonders bevorzugt mittels externer Energieversorgung (Elektro- oder Dieselbetrieb). Bei Schneefall oder gefrierendem Regen kann daher die Bildung einer Schnee- und Eisdecke auf dem Dach der Blache 2 vermieden werden.
Ein Betrieb des Heizgebläses 4 während der Fahrt ist bei Bedarf möglich.

Das Zwischendach 3 ist spannbar resp. verschieblich angeordnet. Ausserhalb der Aufwärmzeiten kann das Zwischendach 3 platzsparend im Laderaum 11 oder auch ausserhalb desselben versorgt werden, ebenso die Heizschläuche 5 und das Heizgebläse 4.

### Liste der Bezugszeichen

- 1: LKW
- 2: Blache
- 3: Zwischendach
- 4: Heizgebläse
- 5: Heizschlauch
- 6: Öffnung
- 7: Deckenfläche
- 8: Halteelement
- 9: Spalt
- 10: Halteelement
- 11: Laderaum

## Patentansprüche

1. Blachenheizung bzw. eine beheizbare Plane für LKW, Anhänger, Auflieger, Festaufbauten oder auch Zeltdächer , umfassend eine formstabil angeordnete Blache (2) oder Plane oberhalb einer Ladefläche, **dadurch gekennzeichnet, dass** unterhalb einer Deckenfläche (7) der Blache (2) im Innern, d. h. des von der Blache (2) umhüllten Raumes auf der Ladefläche eine Heizschlauchanordnung mit mindestens einem Heizschlauch (5) vorgesehen ist.

2. Blachenheizung nach Anspruch 1, **dadurch gekennzeichnet, dass** parallel zur Deckenfläche (7) der Blache (2) ein Zwischendach (3), bevorzugt aus Blachenmaterial und unterhalb des mindestens einen Heizschlauchs (5) vorgesehen ist.

3. Blachenheizung nach Anspruch 1 oder 2, **dadurch gekennzeichnet, dass** der Heizschlauch (5) Öffnungen (6) zum Durchtritt von Warmluft aufweist.

4. Blachenheizung nach mindestens einem der Ansprüche 1 bis 3, **dadurch gekennzeichnet, dass** zwei oder mehrere Heizschläuche (5) vorgesehen sind.

5. Blachenheizung nach mindestens einem der Ansprüche 1 bis 4, **dadurch gekennzeichnet, dass** der mindestens eine Heizschlauch (5) mit einem Heizgebläse (4.) verbindbar ist, das bevorzugt im Laderaum anordenbar ist.

6. Blachenheizung nach mindestens einem der Ansprüche 1 bis 5, **dadurch gekennzeichnet, dass** der mindestens eine Heizschlauch (5) über flexible Halteelemente (8) mit der Deckenfläche (7) verbunden ist.

7. Blachenheizung nach mindestens einem der Ansprüche 1 bis 6, **dadurch gekennzeichnet, dass** der mindestens eine Heizschlauch bevorzugt aus Blachenmaterial besteht.

## Claims

1. A cover-sheet heater or a heatable tarpaulin for lorries, trailers, semi-trailers, fixed bodies or else tent roofs, comprising a dimensionally stably arranged cover sheet (2) or tarpaulin above a loading surface, **characterised in that** a heating-tube arrangement with at least one heating tube (5) is provided below a cover surface (7) of the cover sheet (2), in the interior, i.e. of the space enclosed by the cover sheet (2) on the loading surface.

2. The cover-sheet heater according to claim 1, **characterised in that** an intermediate roof (3), preferably made from cover-sheet material, is provided parallel to the cover surface (7) of the cover sheet (2) and below the at least one heating tube (5).

3. The cover-sheet heater according to claim 1 or 2, **characterised in that** the heating tube (5) has openings (6) for the passage of warm air.

4. The cover-sheet heater according to at least one of claims 1 to 3, **characterised in that** two or a plurality of heating tubes (5) are provided.

5. The cover-sheet heater according to at least one of claims 1 to 4, **characterised in that** the at least one heating tube (5) can be connected to a heater blower (4), which can preferably be arranged in the loading space.

6. The cover-sheet heater according to at least one of claims 1 to 5, **characterised in that** the at least one heating tube (5) is connected to the cover surface (7) by means of flexible retaining elements (8).

7. The cover-sheet heater according to at least one of claims 1 to 6, **characterised in that** the at least one heating tube preferably consists of cover-sheet material.

## Revendications

1. Chauffage de bâche ou bâche chauffable pour des camions, remorques, semi-remorques, structures rigides ou toits en pavillon, comprenant une bâche (2) disposée de manière à conserver une forme stable au-dessus d'une surface de chargement, **caractérisé en ce qu'**en dessous d'une surface de plafond (7) de la bâche (2), il est prévu un système de tubes chauffants avec au moins un tube chauffant (5) à l'intérieur, c'est-à-dire dans l'espace entouré par la bâche (2), sur la surface de chargement.

2. Chauffage de bâche selon la revendication 1, **caractérisé en ce qu'**il est prévu un toit intermédiaire (3) disposé parallèlement à la surface de plafond (7) de la bâche (2) et en dessous de l'au moins un tube chauffant (5), de préférence constitué d'un matériau de bâche.

3. Chauffage de bâche selon la revendication 1 ou 2, **caractérisé en ce que** le tube chauffant (5) comprend des ouvertures (6) pour laisser passer de l'air chaud.

4. Chauffage de bâche selon au moins l'une des revendications 1 à 3, **caractérisé en ce qu'**il est prévu deux ou plusieurs tubes chauffants (5).

5. Chauffage de bâche selon au moins l'une des revendications 1 à 4, **caractérisé en ce que** l'au moins un tube chauffant (5) peut être relié à un ventilateur de chauffage (4), lequel peut être installé de préférence dans l'espace de chargement.

6. Chauffage de bâche selon au moins l'une des revendications 1 à 5, **caractérisé en ce que** l'au moins un tube chauffant (5) est relié à la surface de plafond (7) par le biais d'un élément chauffant souple (8).

7. Chauffage de bâche selon au moins l'une des revendications 1 à 6, **caractérisé en ce que** l'au moins un tube chauffant est constitué d'un matériau de bâche.
